(19) Europäisches Patentamt European Patent Office Office européen des brevets

(11) **EP 1 665 239 B1**

(12) **EUROPEAN PATENT SPECIFICATION**

(45) Date of publication and mention
of the grant of the patent:
**21.05.2008 Bulletin 2008/21**

(51) Int Cl.:
***G11B 7/09*** *(2006.01)*   ***G11B 19/04*** *(2006.01)*
***G11B 5/55*** *(2006.01)*   ***G11B 21/10*** *(2006.01)*

(21) Application number: **04769944.2**

(22) Date of filing: **06.09.2004**

(86) International application number:
**PCT/IB2004/051694**

(87) International publication number:
**WO 2005/024808 (17.03.2005 Gazette 2005/11)**

(54) **DISC DRIVE APPARATUS**

PLATTENLAUFWERKVORRICHTUNG

APPAREIL DU TYPE UNIT  DE DISQUE

(84) Designated Contracting States:
**AT BE BG CH CY CZ DE DK EE ES FI FR GB GR
HU IE IT LI LU MC NL PL PT RO SE SI SK TR**

(30) Priority:  **08.09.2003 EP 03103312**

(43) Date of publication of application:
**07.06.2006 Bulletin 2006/23**

(73) Proprietor: **Koninklijke Philips Electronics N.V.
5621 BA Eindhoven (NL)**

(72) Inventors:
 • **COOLEN, Rob, J., M.
NL-5656 AA Eindhoven (NL)**

 • **CREMERS, Franciscus, L., M.
NL-5656 AA Eindhoven (NL)**
 • **LEENKNEGT, George, A., L.
NL-5656 AA Eindhoven (NL)**
 • **HEERTJES, Marcel, F.
NL-5656 AA Eindhoven (NL)**

(74) Representative: **van Oudheusden-Perset, Laure E.
et al
Société Civile SPID
156, Boulevard Haussmann
75008 Paris (FR)**

(56) References cited:
 **EP-A- 0 875 887    US-B1- 6 219 317**

**Description**

FIELD OF THE INVENTION

The present invention relates in general to a disc drive apparatus for writing or reading information into or from a storage disc. Although the gist of the invention also applies to magnetic discs, the present invention specifically applies to optical discs, for which reason the invention will hereinafter be described for optical discs, while the corresponding disc drive apparatus will also be indicated as "optical disc drive".

BACKGROUND OF THE INVENTION

As is commonly known, an optical storage disc comprises at least one track, either in the form of a continuous spiral or in the form of multiple concentric circles, of storage space where information may be stored in the form of a data pattern. Optical discs may be read-only type, where information is recorded during manufacturing, which information can only be read by a user. The optical storage disc may also be a writeable type, where information may be stored by a user. For writing information in the storage space of the optical storage disc, or for reading information from the disc, an optical disc drive comprises, on the one hand, rotating means for receiving and rotating an optical disc, and on the other hand optical means for generating an optical beam, typically a laser beam, and for scanning the storage track with said laser beam. Since the technology of optical discs in general, the way in which information can be stored in an optical disc, and the way in which optical data can be read from an optical disc, is commonly known, it is not necessary here to describe this technology in more detail.

For rotating the optical disc, an optical disc drive typically comprises a motor, which drives a hub engaging a central portion of the optical disc. Usually, the motor is implemented as a spindle motor, and the motor-driven hub may be arranged directly on the spindle axle of the motor.

For optically scanning the rotating disc, an optical disc drive comprises a light beam generator device (typically a laser diode), an objective lens for focussing the light beam in a focal spot on the disc, and an optical detector for receiving the reflected light reflected from the disc and for generating an electrical detector output signal.

During operation, the light beam should remain focussed on the disc. To this end, the objective lens is arranged axially displaceable, and the optical disc drive comprises focus actuator means for controlling the axial position of the objective lens. Further, the focal spot should remain aligned with a track or should be capable of being positioned with respect to a new track. To this end, at least the objective lens is mounted radially displaceable, and the optical disc drive comprises radial actuator means for controlling the radial position of the objective lens.

In many disc drives, the objective lens is arranged tiltably, and such optical disc drive comprises tilt actuator means for controlling the tilt angle of the objective lens.

For controlling these actuators, the optical disc drive comprises a controller, which receives an output signal from the optical detector. From this signal, hereinafter also referred to as read signal, the controller derives one or more error signals, such as for instance a focus error signal, a radial error signal, and, on the basis of these error signals, the controller generates actuator control signals for controlling the actuators such as to reduce or eliminate position errors.

In the process of generating actuator control signals, the controller shows a certain control characteristic. Such control characteristic is a feature of the controller, which may be described as the way in which the controller behaves as reaction to detecting position errors.

Position errors may, in practice, be caused by different types of disturbances. The two most important classes of disturbances are:

    1) disc defects
    2) external shocks and (periodic) vibration

The first category comprises internal disc defects like black dots, pollution like fingerprints, damage like scratches, etc. The second category comprises shocks caused by an object colliding to the disc drive, but shocks are mainly to be expected in portable disc drives and automobile applications. Apart from the difference in origin, an important distinction between disc defects on the one hand and shocks and vibration on the other hand is the frequency range of signal disturbances: signal disturbances caused by disc defects are typically high-frequency, while shocks and vibrations are typically low-frequency.

A problem in this respect is that adequately handling disturbances of the first category requires a different control characteristic than adequately handling disturbances of the second category. Conventionally, the controller of a disc drive has a fixed control characteristic, which is either specifically adapted for adequately handling disturbances of the first category (in which case error control is not optimal in the case of disturbances of the second category) or specifically adapted for adequately handling disturbances of the second category (in which case error control is not optimal in the case of disturbances of the first category), or the control characteristic is a compromise (in which case error control is not optimal in the case of disturbances of the first category as well as in the case of disturbances of the second category). As long as a controller applies linear control technique, there is always a compromise between low-frequency disturbance rejection and high-frequency sensitivity to measuring noise.

In the state of the art, it has already been proposed to change the gain of the controller, depending on the type of disturbance experienced. For instance, reference is made to US patent 6.219.317.

In order to be able to implement a controller having variable gain, it is necessary to determine which class of disturbance is at hand. To this end, it is known to use a separate shock sensor, measuring acceleration. Said US patent 6.219.317 describes a system where an optical read signal is processed to determine disturbance class.

A general objective of the present invention is to provide a method for reliably detecting whether a position error is caused by a mechanical shock, which method also allows for determining the strength and shape of the shock.

Further, it is an objective of the present invention to provide a method for reliably detecting whether a position error is caused by a mechanical shock, which method is hardly sensitive to disc defects.

## SUMMARY OF THE INVENTION

According to a first important aspect of the present invention, a mathematical model is determined or at least approximated, which model is a frequency-domain description of the relationship between mechanical shocks and a resulting optical error signal, e.g. radial error signal, focus error signal, etc. This model is considered as being a transfer function, wherein the shock is an input variable, and wherein the resulting optical error signal is an output variable.

According to a second important aspect of the present invention, an inverse transfer function is calculated, being an inverse function of said transfer function. This inverse transfer function has the optical error signal as an input variable, and has the shock as output variable.

It is noted that a distinction between shocks in vertical direction (i.e. parallel to the disc rotation axis) and shocks in horizontal direction (i.e. perpendicular to the disc rotation axis) can be made by taking into account the focus error signal or the radial error signal, respectively.

## BRIEF DESCRIPTION OF THE DRAWINGS

These and other aspects, features and advantages of the present invention will be further explained by the following description with reference to the drawings, in which same reference numerals indicate same or similar parts, and in which:

Figure 1A schematically illustrates relevant components of an optical disc drive apparatus;
Figure 1B schematically illustrates an embodiment of an optical detector in more detail;
Figure 2A schematically illustrates the optical disc drive apparatus as a mass-spring system;
Figure 2B schematically illustrates the characteristics of this mass-spring system used for deriving a model;
Figure 3 shows graphs of magnitude and phase of a radial transfer function of external shocks/vibration to radial error signal as a function of frequency;
Figure 4 is a block diagram schematically illustrating a shock detector circuit according to the present invention;
Figure 5 is a block diagram schematically illustrating a preferred embodiment of the shock detector circuit according to the present invention;
Figure 6 shows graphs illustrating simulation test results of the shock detector circuit according to the present invention.

## DESCRIPTION OF THE INVENTION

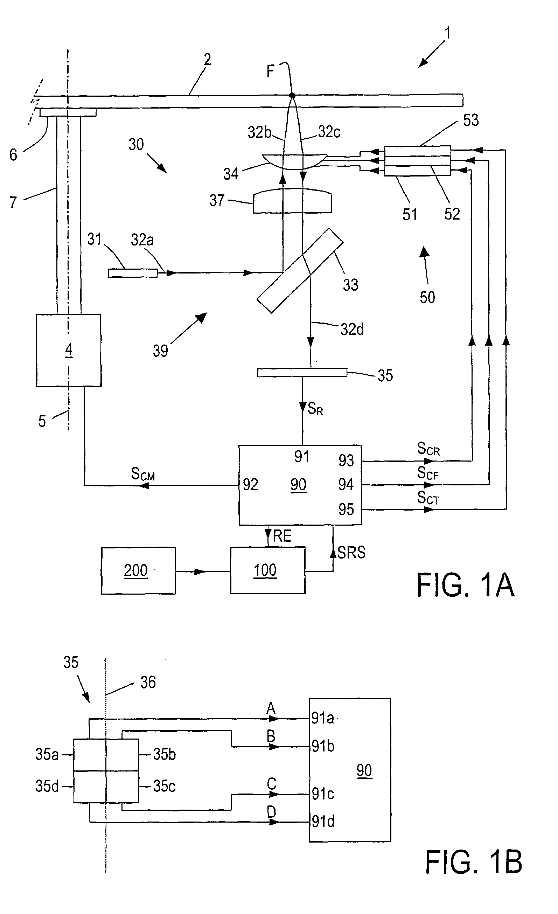

Figure 1A schematically illustrates an optical disc drive apparatus 1, suitable for storing information on or reading information from an optical disc 2, typically a DVD or a CD. For rotating the disc 2, the disc drive apparatus 1 comprises a motor 4 fixed to a frame (not shown for sake of simplicity), defining a rotation axis 5.

The disc drive apparatus 1 further comprises an optical system 30 for scanning tracks (not shown) of the disc 2 by an optical beam. More specifically, in the exemplary arrangement illustrated in figure 1A, the optical system 30 comprises a light beam generating means 31, typically a laser such as a laser diode, arranged to generate a light beam 32. In the following, different sections of the light beam 32, following an optical path 39, will be indicated by a character a, b, c, etc added to the reference numeral 32.

The light beam 32 passes a beam splitter 33, a collimator lens 37 and an objective lens 34 to reach (beam 32b) the disc 2. The light beam 32b reflects from the disc 2 (reflected light beam 32c) and passes the objective lens 34, the collimator lens 37 and the beam splitter 33 (beam 32d) to reach an optical detector 35. The objective lens 34 is designed to focus the light beam 32b in a focal spot F on a recording layer (not shown for sake of simplicity) of the disc.

The disc drive apparatus 1 further comprises an actuator system 50, which comprises a radial actuator 51 for radially displacing the objective lens 34 with respect to the disc 2. Since radial actuators are known per se, while the present invention does not relate to the design and functioning of such radial actuator, it is not necessary here to discuss the design and functioning of a radial actuator in great detail.

For achieving and maintaining a correct focusing, exactly on the desired location of the disc 2, said objective lens 34 is mounted axially displaceable, while further the actuator system 50 also comprises a focus actuator 52 arranged for axially displacing the objective lens 34 with respect to the disc 2. Since focus actuators are known per se, while further the design and operation of such focus actuator is no subject of the present invention, it is not necessary here to discuss the design and operation of such focus actuator in great detail.

For achieving and maintaining a correct tilt position of the objective lens 34, the objective lens 34 may be mounted pivotably; in such case, as shown, the actuator system 50 also comprises a tilt actuator 53 arranged for pivoting the objective lens 34 with respect to the disc 2. Since tilt actuators are known per se, while further the design and operation of such tilt actuator is no subject of the present invention, it is not necessary here to discuss the design and operation of such tilt actuator in great detail.

It is further noted that means for supporting the objective lens with respect to an apparatus frame, and means for axially and radially displacing the objective lens, as well as means for pivoting the objective lens, are generally known per se. Since the design and operation of such supporting and displacing means are no subject of the present invention, it is not necessary here to discuss their design and operation in great detail.

It is further noted that the radial actuator 51, the focus actuator 52 and the tilt actuator 53 may be implemented as one integrated actuator.

The disc drive apparatus 1 further comprises a control circuit 90 having a first output 92 connected to a control input of the motor 4, having a second output 93 coupled to a control input of the radial actuator 51, having a third output 94 coupled to a control input of the focus actuator 52, and having a fourth output 95 coupled to a control input of the tilt actuator 53. The control circuit 90 is designed to generate at its first output 92 a control signal $S_{CM}$ for controlling the motor 4, to generate at its second control output 93 a control signal $S_{CR}$ for controlling the radial actuator 51, to generate at its third output 94 a control signal $S_{CF}$ for controlling the focus actuator 52, and to generate at its fourth output 95 a control signal $S_{CT}$ for controlling the tilt actuator 53.

The control circuit 90 further has a read signal input 91 for receiving a read signal $S_R$ from the optical detector 35.

Figure 1B illustrates that the optical detector 35 may comprise a plurality of detector segments. In the case illustrated in figure 1B, the optical detector 35 comprises four detector segments 35a, 35b, 35c, 35d, capable of providing individual detector signals A, B, C, D, respectively, indicating the amount of light incident on each of the four detector quadrants, respectively. A centre line 36, separating the first and fourth segments 35a and 35d from the second and third segments 35b and 35c, has a direction corresponding to the track direction. Figure 1B also illustrates that, in the case of a four-quadrant detector, the read signal input 91 of the control circuit 90 actually comprises four inputs 91a, 91b, 91c, 91d for receiving said individual detector signals A, B, C, D, respectively. Since such four-quadrant detector is commonly known per se, it is not necessary here to give a more detailed description of Its design and functioning.

It is noted that different designs for the optical detector 35 are also possible. For instance, the optical detector may comprise satellite segments, as known per se.

In any case, as will be clear to a person skilled in the art, the control circuit 90 is designed to process individual detector signals from the detector segments to derive one or more error signals. A radial error signal, designated hereinafter simply as RE, indicates the radial distance between a track and the focal spot F. A focus error signal, designated hereinafter simply as FE, indicates the axial distance between a storage layer and the focal spot F. It is noted that, depending on the design of the optical detector, different formulas for error signal calculation may be used.

The control circuit 90 is designed to generate its control signals as a function of the error signals, to reduce the corresponding error, as will be clear to a person skilled in the art. In this case, the control circuit 90 has a variable control characteristic which depends on the type of error. In the case of errors due to disc defects, the control circuit 90 has a first control characteristic specifically adapted to adequately handle disc defects. In the case of errors due to external shocks, the control circuit 90 has a second control characteristic specifically adapted to adequately handle external shocks, which second control characteristic differs from the first control characteristic. Since the exact nature of these control characteristics are no subject of the present invention, while further control circuits with variable gain are known per se, while further the present invention can be implemented in the case of a control circuit having variable gain, it is not necessary here to describe the control characteristics in more detail. For being able to select the first or second control characteristic, the control circuit 90 needs to know the type of error. To this end, the control circuit 90 is provided with a shock recognition section 100, which receives at least one error signal from the control circuit 90 (radial error signal RE in the exemplary embodiment as illustrated), and which uses this at least one error signal to generate a shock recognition signal SRS for the control circuit 90. This shock recognition signal SRS may simply be indicative for the presence/absence of a shock; preferably, the shock recognition signal SRS also contains information on the strength and shape of the possible shock.

According to an important aspect of the present invention, the shock recognition section 100 is designed to calculate the shock recognition signal SRS on the basis of an inverse shock transfer model, as will be explained in the following.

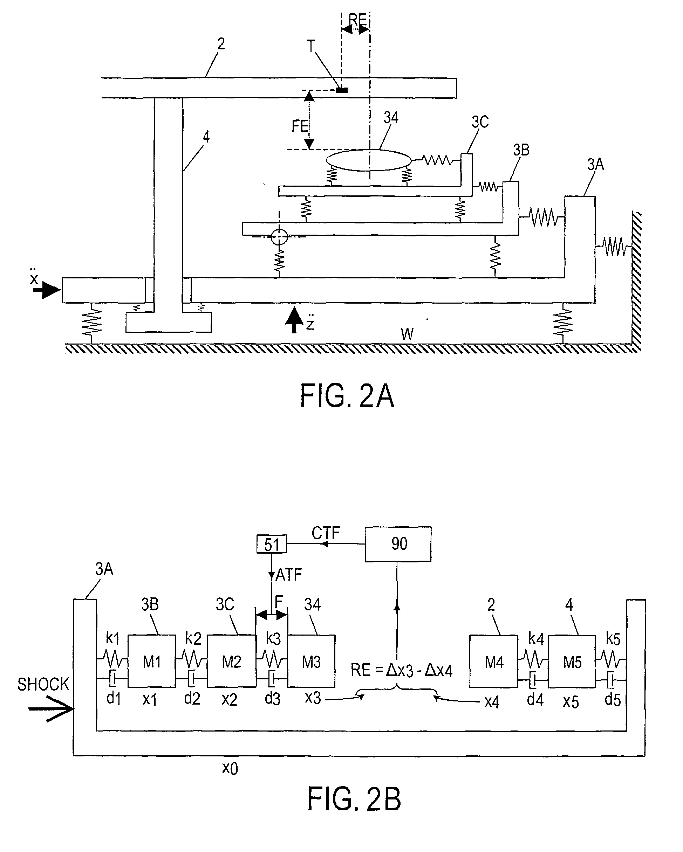

For illustrating a shock transfer model for the case of radial errors, reference is made to figures 2A and 2B.

Figure 2A schematically shows a main apparatus frame 3A of the disc drive apparatus 1, which is movable with respect to the fixed world W. The spindle motor 4 is coupled to the main apparatus frame 3A. The disc 2 is coupled to the spindle motor 4. The disc drive apparatus 1, in this case, comprises a tilt frame 3B which is coupled to the main apparatus frame 3A. An optical pickup unit 3C is coupled to the tilt frame 3B. The objective lens 34 is coupled to the optical pickup unit 3C. A track of the optical disc 2 is schematically indicated as T. A radial error and a focus error are schematically indicated as RE and FE, respectively.

Alternatively, the disc drive apparatus 1 may comprise a 3D actuator instead of a tilt frame, or the disc drive apparatus 1 may be without tilt facility.

With reference to figure 2B, which illustrates a 1D-model of the disc drive apparatus 1, the equivalent mass of tilt frame 3B will be defined as M1, the equivalent mass of optical pickup unit 3C will be defined as M2, the equivalent mass of objective lens 34 will be defined as M3, the equivalent mass of disc 2 will be defined as M4, and the equivalent mass of spindle motor 4 will be defined as M5.

The coupling between tilt frame 3B and main apparatus frame 3A is represented by an equivalent stiffness k1 and an equivalent damping d1. The coupling between optical pickup unit 3C and tilt frame 3B is represented by an equivalent stiffness k2 and an equivalent damping d2.

The coupling between objective lens 34 and optical pickup unit 3C is represented by an equivalent stiffness k3 and an equivalent damping d3.

The coupling between disc 2 and spindle motor 4 is represented by an equivalent stiffness k4 and an equivalent damping d4.

The coupling between spindle motor 4 and main apparatus frame 3A is represented by an equivalent stiffness k5 and an equivalent damping d5.

The X-position of main apparatus frame 3A is indicated as x0.

The X-position of M1 is indicated as x1.

The X-position of M2 is indicated as x2.

The X-position of M3 is indicated as x3.

The X-position of M4 is indicated as x4.

The X-position of M5 is indicated as x5.

In response to sensing a radial error signal RE, the control circuit 90 controls the radial actuator 51, such that a force F is generated, acting between lens 34 and optical pickup unit 3C. The characteristic of the control circuit 90 is indicated as control transfer function CTF, while the characteristic of the radial actuator 51 is indicated as actuator transfer function ATF.

An external shock, acting on the main apparatus frame 3A in the radial direction, will be indicated as $\ddot{x}0_{EXT}$, indicating an acceleration of the main apparatus frame 3A. It is noted that shock $\ddot{x}0_{EXT}$ will be a function of time t. The shock $\ddot{x}0_{EXT}$ results in a displacement $\Delta x0$ of main apparatus frame 3A, this displacement also being a function of time. Through the mechanical path from main apparatus frame 3A via tilt frame 3B and optical pickup unit 3C, a displacement $\Delta x3$ of objective lens 34 results, which can be expressed as

$$\Delta x3(s) = H_{LENS}(s) \cdot \Delta x0(s),$$

with

$$H_{LENS}(s) = \frac{d_1 s + k_1}{m_1 s^2 + d_1 s + k_1} \cdot \frac{d_2 s + k_2}{m_2 s^2 + d_2 s + k_2} \cdot \frac{d_3 s + k_3}{m_3 s^2 + d_3 s + k_3} \qquad (1)$$

Similarly, through the mechanical path from main apparatus frame 3A via spindle motor 4, a displacement $\Delta x4$ of disc 2 results, which can be expressed as

$$\Delta x4(s) = H_{DISC}(s) \cdot \Delta x0(s),$$

with

$$H_{DISC}(s) = \frac{d_4 s + k_4}{m_4 s^2 + d_4 s + k_4} \cdot \frac{d_5 s + k_5}{m_5 s^2 + d_5 s + k_5} \qquad (2)$$

The radial error RE can basically be expressed as $RE = \Delta x3 - \Delta x4$. Thus, the shock sensitivity $S_{SHOCK}$ of the system can be written as

$$S_{SHOCK}(s) = \frac{RE}{\ddot{x}0_{EXT}} = \frac{1}{s^2} \cdot S_{CONTROL}(s) \cdot \left( H_{LENS}(s) - H_{DISC}(s) \right) \qquad (3)$$

with

$$S_{CONTROL}(s) = \frac{1}{1 + CTF(s) \cdot ATF(s)} \qquad (4)$$

In the frequency range of interest, i.e. below approximately 200 Hz, $H_{LENS}(s)$ can be approximated as follows:

$$H_{LENS}(s) \approx \frac{d_3 s + k_3}{m_3 s^2 + d_3 s + k_3} = \left( d_3 s + k_3 \right) \cdot ATF(s) \qquad (5)$$

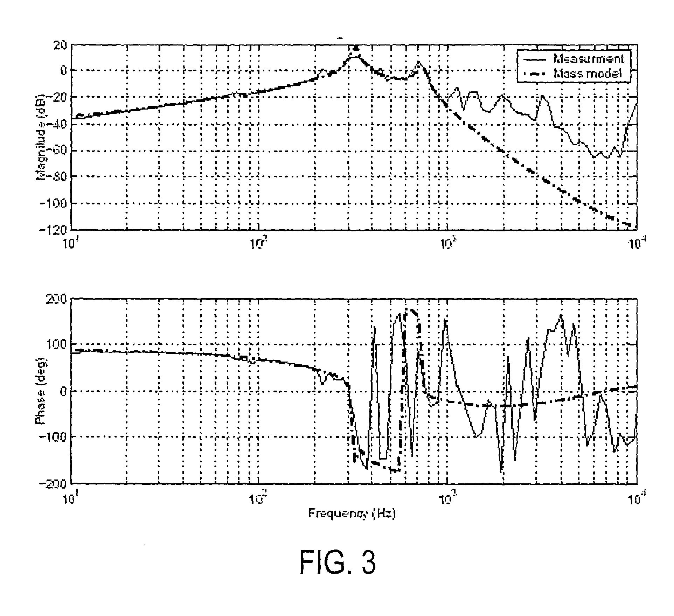

The model of formula (3) is validated by experiments, as illustrated by figure 3, which shows graphs of magnitude (upper graph) and phase (lower graph) of the radial transfer function of external shocks/vibration to radial error signal as a function of frequency, as measured (solid line) and predicted by the model (broken line). In the frequency range of interest (in the automotive branch: between about 10 Hz and about 200 Hz), the correspondence between model and measurement is remarkably good.

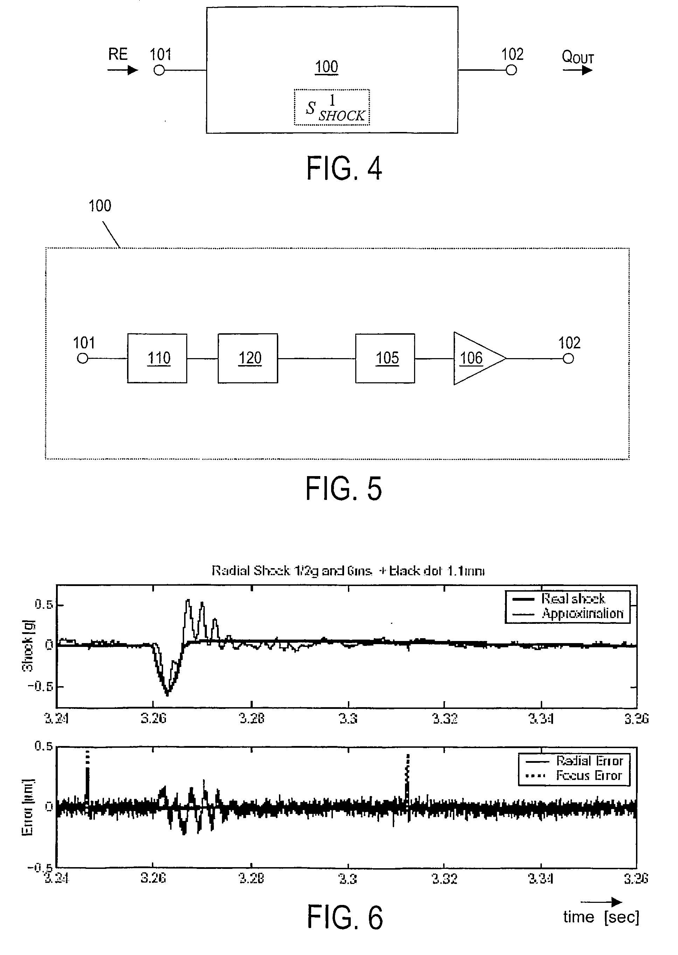

The shock sensitivity $S_{SHOCK}$ of the system describes how the system behaves in the case of shocks and vibrations having a certain frequency contents (more particularly in this case: the error signal RE resulting from such shock). In other words, $S_{SHOCK}$ describes RE as a function of shock. Once this shock sensitivity $S_{SHOCK}$ has been determined, it is possible to calculate the inverse shock sensitivity $S_{SHOCK}^{-1}$. This is a function which describes shock as a function of RE. A processor programmed to calculate the inverse shock sensitivity $S_{SHOCK}^{-1}$, on receiving the error signal RE as an input signal, will generate an output signal $Q_{OUT}$ which reconstructs the shock $\ddot{x}0_{EXT}$. This is the basis of the shock detector proposed by the present invention, as illustrated in figure 4, which is a block diagram showing a shock recognition circuit 100 having an input 101 for receiving radial error signal RE and having an output 102 for providing the output signal $Q_{OUT}$, the shock recognition circuit 100 being designed to apply the inverse shock sensitivity $S_{SHOCK}^{-1}$ on its input signal RE, for instance as follows:

$$Q_{OUT} = S_{SHOCK}^{-1}(RE)$$

It is noted that the output signal $Q_{OUT}$ can be used as shock recognition signal SRS mentioned earlier, or it can be used as basis for further processing to derive a shock recognition signal SRS, for instance by comparing $Q_{OUT}$ with a predefined threshold level.

In principle, the shock sensitivity $S_{SHOCK}$ of the system is constant, and may be determined by a manufacturer for each apparatus individually, or for a specific type of apparatus in general. The same applies to the inverse shock sensitivity $S_{SHOCK}^{-1}$. Information defining the inverse shock sensitivity $S_{SHOCK}^{-1}$ may be available to the shock recognition circuit 100 by being stored in an associated memory 200, for instance as a formula or in the form of a look-up table, as will be clear to a person skilled in the art.

When studying figure 3, it can be seen that, in a frequency range of interest, especially below 200 Hz, the radial transfer function has a positive slope of about 20 dB per decade in the amplitude characteristic (upper graph) at a substantially constant phase of about +90˚ (lower graph). When this behaviour is inverted, a negative slope of about -20 dB per decade in the amplitude characteristic will result, together with a substantially constant phase of about -90˚. Such characteristic is associated with an integrating operation. In this respect, it is noted that the high-frequency part of figure 3 is disregarded, in order not to amplify disc defects, and also to avoid causality problems.

Thus, it appears possible to implement the shock recognition circuit 100 by a simple integrator 105, possibly followed by an amplifier 106, as illustrated in figure 5.

However, in a preferred embodiment, also illustrated in figure 5, the sensitivity of the shock recognition circuit 100 is reduced with respect to disturbances other than shock and vibrations which occur in the same frequency range. An important source for such other disturbances is eccentricity of the disc, leading to disturbances having a frequency equal to the disc rotation frequency. To suppress these disturbances, the shock recognition circuit 100 comprises an additional notch filter 110 coupled in the signal path from the input 101 to the integrator 105, the notch filter 110 having its central frequency at the disc rotation frequency.

Further, it is desirable to suppress DC components. To this end, the shock recognition circuit 100 preferably comprises an additional high-pass filter 120 coupled in the signal path from the input 101 to the integrator 105, the high-pass filter 120 suitably having a cut-off frequency in the range of, for instance, about 1 Hz to about 10 Hz.

It is noted that, in the case of disc defects, the errors are controlled back to zero. Any remaining error signals do not contain reliable position information. Therefore, in such case, it is preferred to switch off the input signal for the integrator.

The operation of the shock recognition circuit 100 of figure 5 was tested by simulation. The results of this simulation are shown in figure 6, which shows graphs of shock (upper graph) and error (lower graph) as a function of time. A real mechanical (radial) shock was applied to the disc drive, and the magnitude of this shock was measured by a shock sensor; the result is shown in curve 61: it follows that this shock had a magnitude of 0.5 g and a duration of 6 ms. Curves 62 and 63 illustrate the measured radial error and focus error, respectively, resulting from this shock. The radial error was fed as input signal to the simulated shock recognition circuit 100 of figure 5; the output signal $Q_{OUT}$ is illustrated by curve 64.

Comparing curve 64 with curve 61 demonstrates that the shock detector circuit proposed by the present invention is capable of detecting quite accurately the occurrence of a shock from a suitable processing of an error signal. Apart from a high-frequency oscillation, which is caused by a gain difference in the filter approximation as used in the simulation, and which can be improved by increasing the model accuracy, the output signal $Q_{OUT}$ quite accurately reflects the timing and magnitude of the original shock.

Further, figure 6 demonstrates that the shock detector circuit proposed by the present invention is hardly or not sensitive to disc defects. The disc used in the simulation was provided with a black dot with a diameter of 1.1 mm, which results in large radial and focus errors at time t ≈ 3.31 s (curves 62 and 63). Nevertheless, the output signal $Q_{OUT}$ shows only a minor response at time t ≈ 3.31 s, hardly noticeable, and at least easily distinguishable from the shock response around time t ≈ 3.26 s.

It should be clear to a person skilled in the art that the present invention is not limited to the exemplary embodiments discussed above, but that several variations and modifications are possible within the protective scope of the invention as defined in the appending claims.

In the above, a model is described for the case of radial errors, caused by a shock in the horizontal direction (i.e. perpendicular to the disc rotation axis). A similar model can be derived for the case of focus errors, which in fact are axial errors, usually caused by a shock in the vertical direction, as will be clear to a person skilled in the art. Likewise, a similar model can be derived for the case of tilt errors. All these errors signals are suitable for use in the present invention.

In the above description, the inverse sensitivity function is used to reconstruct the acceleration profile which has caused a certain position error. From this reconstructed profile, it is determined whether this profile corresponds to a shock or vibration, or to disc errors. On the basis of this determination, a control characteristic of the control circuit is adapted. The reconstructed acceleration profile can also be used for different purposes, for instance for generating an alarm signal if a severe shock is detected, or to stop playback in case of severe shocks. However, merely reconstructing the acceleration profile, if only for purposes of information or measurement, is already an embodiment of the present invention.

In the above, the control circuit 90 and the shock recognition circuit 100 are described as separate circuits. However, it is also possible that the shock recognition circuit 100 and the control circuit 90 are integrated into one circuit.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, etc.

**Claims**

1. Method for detecting a mechanical shock in a disc drive apparatus (1), the disc drive apparatus (1) comprising:

   - scanning means (30) for scanning a record track of a disc (2) and for generating a read signal ($S_R$);
   - actuator means (50) for controlling the positioning of at least one read or write element (34) of said scanning means (30) with respect to the disc (2);
   - a control circuit (90) for receiving said read signal ($S_R$), deriving at least one error signal (RE; FE) from said read signal ($S_R$), and generating at least one actuator control signal ($S_{CR}$; $S_{CF}$) on the basis of said error signal (RE; FE);

   the method comprising the steps of:

   - determining a shock sensitivity function ($S_{SHOCK}$) which describes the relationship between shocks ($\ddot{x}0_{EXT}$) and said at least one error signal (RE; FE);

   - determining or at least approximating an inverse shock sensitivity function ($S_{SHOCK}^{-1}$) as the inverse of said shock sensitivity function ($S_{SHOCK}$);

   - and applying said inverse shock sensitivity function ($S_{SHOCK}^{-1}$) on said at least one error signal (RE; FE).

2. Method according to claim 1, wherein the error signal (RE; FE) is integrated.

3. Method according to claim 1, wherein DC components of the error signal (RE; FE) are suppressed.

4. Method according to claim 1, wherein frequency components of the error signal (RE; FE) corresponding to the disc rotation frequency are suppressed.

5. Method of positioning a read or write element (34) of a disc drive apparatus (1) with respect to a disc (2), the disc drive apparatus (1) comprising:

   - scanning means (30) for scanning a record track of a disc (2) and for generating a read signal ($S_R$);
   - actuator means (50) for controlling the positioning of at least one read or write element (34) of said scanning means (30) with respect to the disc (2);
   - a control circuit (90) for receiving said read signal ($S_R$), deriving at least one error signal (RE; FE) from said read signal ($S_R$), and generating at least one actuator control signal ($S_{CR}$; $S_{CF}$) on the basis of said error signal (RE; FE), the control circuit (90) having a variable control characteristic (CTF);

   the method comprising the steps of:

   - operating the control circuit (90) with a first characteristic suitable for the case of disc defects;
   - receiving said at least one error signal (RE; FE);

   - detecting a mechanical shock by applying an inverse shock sensitivity function ($S_{SHOCK}^{-1}$) on said at least one error signal (RE; FE);

- in response of detecting a mechanical shock, operating the control circuit (90) with a second characteristic suitable for the case of mechanical shocks, the second characteristic being different from the first characteristic.

**6.** Disc drive apparatus (1) comprising:

- scanning means (30) for scanning a record track of a disc (2) and for generating a read signal ($S_R$);
- actuator means (50) for controlling the positioning of at least one read/write element (34) of said scanning means (30) with respect to the disc (2);
- a control circuit (90) for receiving said read signal ($S_R$), deriving at least one error signal (RE; FE) from said read signal ($S_R$), and generating at least one actuator control signal ($S_{CR}$; $S_{CF}$) on the basis of said error signal (RE; FE), the control circuit (90) having a variable control characteristic (CTF);
- a shock recognition circuit (100) associated with the control circuit (90) for receiving said at least one error signal (RE; FE), the shock recognition circuit (100) being designed for detecting a mechanical shock by applying an inverse shock sensitivity function ($S_{SHOCK}^{-1}$) on said at least one error signal (RE; FE).

**7.** Disc drive apparatus according to claim 6,
wherein the shock recognition circuit (100) is designed for generating an output signal ($Q_{OUT}$; SRS) indicating the presence or absence of a mechanical shock;
wherein the control circuit (90) is coupled to the shock recognition circuit (100) for receiving said output signal ($Q_{OUT}$; SRS);
and wherein the control circuit (90) is designed to set its control characteristic on the basis of the signal ($Q_{OUT}$; SRS) received from the shock recognition circuit (100).

**8.** Shock recognition circuit (100), having an input (101) for receiving at least one error signal (RE; FE), and having an output (102) for generating an output signal ($Q_{OUT}$; SRS) indicating the presence or absence of a mechanical shock;
the shock recognition circuit (100) being designed for detecting a mechanical shock by applying an inverse shock sensitivity function ($S_{SHOCK}^{-1}$) on said at least one error signal (RE; FE).

**9.** Shock recognition circuit according to claim 8, comprising an integrator (105), possibly followed by an amplifier (106).

**10.** Shock recognition circuit according to claim 9, further comprising a notch filter (110).

**11.** Shock recognition circuit according to claim 9, further comprising a high-pass filter (120).

**12.** Disc drive apparatus according to claim 6, comprising a shock recognition circuit (100) according to claim 9.

**Patentansprüche**

**1.** Verfahren zum Erfassen eines mechanischen Schocks in einer Plattenlaufwerkvorrichtung (1), wobei die Plattenlaufwerkvorrichtung (1) Folgendes umfasst:

- Scanmittel (30) zum Scannen einer Aufnahmespur einer Platte (2) und zum Erzeugen eines Lesesignals ($S_R$);
- Aktuatormittel (50) zum Steuern der Positionierung mindestens eines Lese- oder Schreibelements (34) der Scanmittel (30) bezüglich der Scheibe (2);
- Steuerschaltung (90) zum Empfangen des Lesesignals ($S_R$), zum Ableiten mindestens eines Fehlersignals (RE; FE) aus dem Lesesignal ($S_R$) und zum Erzeugen mindestens eines Aktuatorsteuersignals ($S_{CR}$; $S_{CF}$) auf der Basis des Fehlersignals (RE; FE) ;

wobei das Verfahren die folgenden Schritte umfasst:

- Bestimmen einer Schockempfindlichkeitsfunktion ($S_{SCHOCK}$), die die Beziehung zwischen den Schocks ($O_{EXT}$) und dem mindestens einen Fehlersignal (RE; FE) beschreibt;
- Bestimmen oder zumindest Annähern einer inversen Schockempfindlichkeitsfunktion ($S^{-1}_{SCHOCK}$) als Umkehrung der Schockempfindlichkeitsfunktion ($S_{SCHOCK}$);

- und Anlegen der inversen Schockempfindlichkeitsfunktion ($S^{-1}_{SCHOCK}$) auf das mindestens eine Fehlersignal (RE; FE).

2. Verfahren nach Anspruch 1, wobei das Fehlersignal (RE; FE) integriert ist.

3. Verfahren nach Anspruch 1, wobei die Gleichstromkomponenten des Fehlersignals (RE; FE) unterdrückt werden.

4. Verfahren nach Anspruch 1, wobei die Frequenzkomponenten des Fehlersignals (RE; FE), die der Drehfrequenz der Platte entsprechen, unterdrückt werden.

5. Verfahren zum Positionieren eines Lese- oder Schreibelements (34) einer Plattenlaufwerkvorrichtung (1) bezüglich einer Platte (2), wobei die Plattenlaufwerkvorrichtung (1) Folgendes umfasst:

   - Scanmittel (30) zum Scannen einer Aufnahmespur einer Scheibe (2) und zum Erzeugen eines Lesesignals ($S_R$);
   - Aktuatormittel (50) zum Steuern der Positionieren mindestens eines Lese- oder Schreibelements (34) der Scanmittel (30) bezüglich der Platte (2);
   - Steuerschaltung (90) zum Empfangen des Lesesignals ($S_R$), zum Ableiten mindestens eines Fehlersignals (RE; FE) aus dem Lesesignal ($S_R$) und Erzeugen mindestens eines Aktuatorsteuersignals ($S_{CR}$, $S_{CF}$) auf der Basis des Fehlersignals (RE; FE), wobei die Steuerschaltung (90) eine variable Steuercharakteristik (CTF) aufweist;

   wobei das Verfahren die folgenden Schritte umfasst:

   - Betreiben der Steuerschaltung (90) mit einer ersten Charakteristik, die sich für den Fall von Plattenfehler eignet;
   - Empfangen des mindestens einen Fehlersignals (RE; FE);
   - Erfassen eines mechanischen Schocks durch Anlegen einer inversen Schockempfindlichkeitsfunktion ($S^{-1}_{SCHOCK}$) an das mindestens eine Fehlersignals (RE; FE);
   - in Reaktion auf das Erfassen eines mechanischen Schocks das Betreiben der Steuerschaltung (90) mit einer zweiten Charakteristik, die sich für den Fall mechanischer Schocks eignet, wobei die zweite Charakteristik sich von der ersten Charakteristik unterscheidet.

6. Plattenlaufwerkvorrichtung (1), umfassend:

   - Scanmittel (30) zum Scannen einer Aufnahmespur einer Platte (2) und zum Erzeugen eines Lesesignals ($S_R$);
   - Aktuatormittel (50) zum Steuern der Positionierung mindestens eines Lese-/Schreibelements (34) der Scanmittel (30) bezüglich der Platte (2);
   - Steuerschaltung (90) zum Empfangen des Lesesignals ($S_R$), zum Ableiten mindestens eines Fehlersignals (RE; FE) aus dem Lesesignal ($S_R$) und zum Erzeugen mindestens eines Aktuatorsteuersignals ($S_{CR}$; $S_{CF}$) auf der Basis des Fehlersignals (RE; FE),

   wobei die Steuerschaltung (90) eine variable Steuercharakteristik (CTF) aufweist;

   - Schockerkennungsschaltung (100), die mit der Steuerschaltung (90) zum Empfangen des mindestens einen Fehlersignals (RE; FE) verbunden ist; wobei die Schockerkennungsschaltung (100) dazu ausgelegt ist, einen mechanischen Schock zu erfassen, indem eine inverse Schockempfindlichkeitsfunktion ($S^{-1}_{SCHOCK}$) auf das mindestens eine Fehlersignal (RE; FE) angelegt wird.

7. Plattenlaufwerkvorrichtung nach Anspruch 6, wobei die Schockerkennungsschaltung (100) dazu ausgelegt ist, ein Ausgabesignal ($Q_{AUS}$; SRS) zu erzeugen, welches das Vorliegen oder die Abwesenheit eines mechanischen Schocks anzeigt; wobei die Steuereinheit (90) mit der Schockerkennungseinheit (100) zum Empfang des Ausgabesignals ($Q_{AUS}$; SRS) gekoppelt ist, und wobei die Steuerschaltung (90) dazu ausgelegt ist, ihre Steuercharakteristik auf der Grundlage des Signals ($Q_{AUS}$; SRS), welches von der Schockerkennungsschaltung (100) empfangen wird, einzustellen.

8. Schockerkennungsschaltung (100) mit einem Eingang (101) zum Empfangen mindestens eines Fehlersignals (RE; FE) und mit einem Ausgang (102) zum Erzeugen eines Ausgabesignals ($Q_{AUS}$; SRS), das das Vorhandensein oder die Abwesenheit eines mechanischen Schocks anzeigt,

wobei die Schockerkennnungsschaltung (100) dazu ausgelegt ist, einen mechanischen Schock zu erfassen, indem eine inverse Schockempfindlichkeitsfunktion ($S^{-1}{}_{SCHOCK}$) an das mindestens eine Fehlersignal (RE; FE) angelegt wird.

**9.** Schockerkennungsschaltung nach Anspruch 8, umfassend einen Integrator (105), möglicherweise gefolgt von einem Verstärker (106).

**10.** Schockerkennungsschaltung nach Anspruch 9, ferner umfassend ein Nutfilter (110).

**11.** Schockerkennungsschaltung nach Anspruch 9, ferner umfassend ein Hochpassfilter (120).

**12.** Plattenlaufwerkvorrichtung nach Anspruch 6, umfassend einen Schockerkennungsschaltung (100) nach Anspruch 9.

**Revendications**

**1.** Procédé de détection d'un choc mécanique dans un appareil de type unité de disque (1), l'appareil de type unité de disque (1) comprenant :

- un moyen de balayage (30) pour balayer une piste d'enregistrement d'un disque (2) et générer un signal de lecture ($S_R$) ;
- un dispositif d'actionnement (50) pour régler le positionnement d'au moins un élément de lecture ou d'écriture (34) dudit moyen de balayage (30) par rapport au disque (2) ;
- un circuit de commande (90) pour recevoir ledit signal de lecture ($S_R$), tirer au moins un signal d'erreur (RE ; FE) dudit signal de lecture ($S_R$) et générer au moins un signal de commande d'actionnement ($S_{CR}$; $S_{CF}$) sur la base dudit signal d'erreur (RE ; FE) ; le procédé comprenant les étapes consistant à :
- déterminer une fonction de sensibilité aux chocs ($S_{SHOCK}$) qui décrit la relation entre les chocs ($\ddot{x}0_{EXT}$) et ledit au moins un signal d'erreur (RE ; FE) ;

- déterminer ou au moins calculer par approximation une fonction de sensibilité aux chocs inverse ( $S^{-1}_{SHOCK}$ ) comme étant ladite fonction de sensibilité aux chocs inverse ($S_{SHOCK}$); et

- appliquer ladite fonction de sensibilité aux chocs inverse ( $S^{-1}_{SHOCK}$ ) audit au moins un signal d'erreur (RE ; FE).

**2.** Procédé selon la revendication 1, dans lequel le signal d'erreur (RE ; FE) est intégré.

**3.** Procédé selon la revendication 1, dans lequel les composants DC (direct current - courant continu) du signal d'erreur (RE ; FE) sont supprimés.

**4.** Procédé selon la revendication 1, dans lequel les composantes de fréquence du signal d'erreur (RE ; FE) correspondant à la fréquence de rotation du disque sont supprimées.

**5.** Procédé de positionnement d'un élément de lecture ou d'écriture (34) d'un appareil de type unité de disque (1) par rapport à un disque (2), l'appareil de type unité de disque (1) comprenant :

- un moyen de balayage (30) pour balayer une piste d'enregistrement d'un disque (2) et générer un signal de lecture ($S_R$) ;
- un dispositif d'actionnement (50) pour commander le positionnement d'au moins un élément de lecture ou d'écriture (34) dudit moyen de balayage (30) par rapport au disque (2) ;
- un circuit de commande (90) pour recevoir ledit signal de lecture ($S_R$), tirer au moins un signal d'erreur (RE ; FE) dudit signal de lecture ($S_R$) et générer au moins un signal de commande d'actionnement ($S_{CR}$, $S_{CF}$) sur la base dudit signal d'erreur (RE ; FE), le circuit de commande (90) ayant une caractéristique de commande variable (CTF) ;

le procédé comprend les étapes consistant à :

- mettre en service le circuit de commande (90) avec une première caractéristique convenant au cas de défauts de disque ;
- recevoir ledit au moins un signal d'erreur (RE ; FE) ;

- détecter un choc mécanique en appliquant une fonction de sensibilité aux chocs inverse $(S_{SHOCK}^{-1})$ audit au moins un signal d'erreur (RE ; FE) ;
- en réponse à la détection d'un choc mécanique, mettre en service le circuit de commande (90) avec une deuxième caractéristique convenant au cas de chocs mécaniques, la deuxième caractéristique étant différente de la première caractéristique.

6. Appareil de type unité de disque (1) comprenant :

- un moyen de balayage (30) pour balayer une piste d'enregistrement d'un disque (2) et générer un signal de lecture ($S_R$);
- un dispositif d'actionnement (50) pour commander le positionnement d'au moins un élément de lecture/écriture (34) dudit moyen de balayage (30) par rapport au disque (2) ;
- un circuit de commande (90) pour recevoir ledit signal de lecture ($S_R$), tirer au moins un signal d'erreur (RE ; FE) dudit signal de lecture ($S_R$) et générer au moins un signal de commande d'actionnement ($S_{CR}$; $S_{CF}$) sur la base dudit signal d'erreur (RE ; FE), le circuit de commande (90) ayant une caractéristique de commande variable (CTF) ;
- un circuit de reconnaissance de choc (100) associé au circuit de commande (90) pour recevoir ledit au moins un signal d'erreur (RE ; FE), le circuit de reconnaissance de choc (100) étant conçu pour détecter un choc mécanique en appliquant une fonction de sensibilité aux chocs inverse $(S_{SHOCK}^{-1})$ audit au moins un signal d'erreur (RE ; FE).

7. Appareil de type unité de disque selon la revendication 6,
dans lequel le circuit de reconnaissance de choc (100) est conçu pour générer un signal de sortie ($Q_{OUT}$ ; SRS) indiquant la présence ou l'absence d'un choc mécanique ;
dans lequel le circuit de commande (90) est couplé au circuit de reconnaissance de choc (100) pour recevoir ledit signal de sortie ($Q_{OUT}$; SRS) ;
et dans lequel le circuit de commande (90) est conçu pour définir ses caractéristiques de commande sur la base du signal ($Q_{OUT}$ ; SRS) reçu du circuit de reconnaissance de choc (100).

8. Circuit de reconnaissance de choc (100), ayant une entrée (101) pour recevoir au moins un signal d'erreur (RE ; FE) et une sortie (102) pour générer un signal de sortie ($Q_{OUT}$ ; SRS) indiquant la présence ou l'absence d'un choc mécanique ;
le circuit de reconnaissance de choc (100) étant conçu pour détecter un choc mécanique en appliquant une fonction de sensibilité aux chocs inverse $(S_{SHOCK}^{-1})$ audit au moins un signal d'erreur (RE ; FE).

9. Circuit de reconnaissance de choc selon la revendication 8, comprenant un intégrateur (105), éventuellement suivi d'un amplificateur (106).

10. Circuit de reconnaissance de choc selon la revendication 9, comprenant en outre un filtre d'encoches (110).

11. Circuit de reconnaissance de choc selon la revendication 9, comprenant en outre un filtre passe-haut (120).

12. Appareil de type unité de disque selon la revendication 6, comprenant un circuit de reconnaissance de choc (100) selon la revendication 9.

FIG. 1A

FIG. 1B

FIG. 2A

FIG. 2B

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6219317 B